Europäisches Patentamt

(19) European Patent Office

Office européen des brevets

(11) Numéro de publication: **0 077 719**
**A2**

(12) **DEMANDE DE BREVET EUROPEEN**

(21) Numéro de dépôt: **82401868.3**

(22) Date de dépôt: **12.10.82**

(51) Int. Cl.³: **B 60 B 33/02**
**B 62 B 5/04**

(30) Priorité: **16.10.81 FR 8119443**

(43) Date de publication de la demande:
**27.04.83 Bulletin 83/17**

(84) Etats contractants désignés:
**CH DE GB IT LI NL**

(71) Demandeur: **Lacroix, Gérard**
**16 rue du Moulin**
**F-94500 Champigny s/Marne(FR)**

(72) Inventeur: **Lacroix, Gérard**
**16 rue du Moulin**
**F-94500 Champigny s/Marne(FR)**

(74) Mandataire: **Cuer, André**
**CABINET CUER 30, rue de Léningrad**
**F-75008 Paris(FR)**

(54) **Système de blocage-déblocage des roues d'un chariot.**

㊗ Dispositif de blocage et déverrouillage des roues d'un chariot de type connu comportant, dans une plaque-support (1) où sont fixées les roues (2), une tringle (4) actionnée par pédale et commandant des plaquettes de freinage sur les roues.

Selon l'invention, on prévoit, au centre de la plaque-support (1), un ensemble de boîtier (6) destiné à coordonner les mouvements successifs de deux pédales (7,9) et (14) qui servent, par appui dans le même sens de haut en bas, à assurer le blocage puis le déblocage des roues.

Application à la réalisation de chariots roulants utilisables notamment dans les véhicules de transport de personnes tels que chemins de fer et avions.

Fig.1

EP 0 077 719 A2

Croydon Printing Company Ltd.

La présente invention a trait au domaine des chariots roulants destinés au service dans la restauration, les collectivités, les moyens de transport tels que chemins de fer et avions. Elle concerne tout spécialement un dispositif permettant, par l'actionnement de deux pédales distinctes, le blocage et le déblocage du frein d'un chariot à roulettes.

On connait déjà des chariots à roues munis de systèmes de freins et destinés au service et à la desserte de clients en restauration dans des lieux étroits et pentus, comme par exemple ceux utilisés par les hôtesses dans les avions. Dans les chariots de ce type, le blocage des roues s'effectue par appui sur la roue d'une plaquette (ou patin) actionnée par une tringle, laquelle est commandée par une pédale à la base du chariot. Pour déverrouiller la position de freinage et libérer ainsi le véhicule pour un nouveau déplacement, l'hôtesse est obligée d'introduire son pied sous la tringlerie disposée sous le chariot et près du sol, puis de soulever la partie supérieure du pied pour entraîner la tringle.

Un système de ce type présente plusieurs inconvénients dont on a été obligé, jusqu'ici de s'accommoder ; en particulier, il faut à chaque fois exercer vers le haut un effort assez important qui provoque l'écrasement de la chaussure et parfois des douleurs au pied ; par ailleurs, le frein exige un réglage fréquent au fur et à mesure de l'usure des pièces en appui, ce réglage étant généralement effectué au moyen d'une vis latérale sur la ou les roues équipées du moyen de freinage.

L'invention a pour but d'éliminer ces inconvénients et propose à cet effet une nouvelle conception de freinage puis de déverrouillage de frein dans un chariot du type susmentionné, selon laquelle les deux phases successives de blocage puis de déblocage des roulettes sont obtenues par simple pression ou appui du pied sur deux pédales disposées à proximité l'une de l'autre à la base du chariot.

Le nouveau dispositif selon l'invention, qui permet de résoudre ce problème technique, est caractérisé en ce qu'il est constitué par un boîtier, fixé sur la plaque-support des roues du chariot et traversé par la tringle connue en soi d'actionnement des plaquettes d'appui sur roues, ce boîtier comprenant un élément pivotant de type mâchoire monté sur un axe transversal, commandé par une première pédale et relié par ressort à une seconde pédale, ladite mâchoire étant pourvue d'un épaulement dans le creux duquel vient se loger la 0077719 tringle dans la position de blocage du chariot par appui sur la seconde pédale, la position de déblocage - qui permet à la tringle d'échapper à l'épaulement - étant obtenue par appui sur la première pédale.

Selon un mode préférentiel de réalisation, la première pédale étant à l'extérieur du boîtier, la seconde pédale est constituée par une tôle à bords relevés munie d'échancrure pour le passage de la tringle et montée à pivotement autour d'un repli de ladite plaque-support des roues du chariot, cette tôle faisant saillie du boîtier par une languette qui sert de point d'appui pour la pédale.

D'autres caractéristiques structurelles apparaîtront au cours de la description qui suit, relative à un mode de réalisation non limitatif, illustré par les dessins des planches annexées qui représentent respectivement :

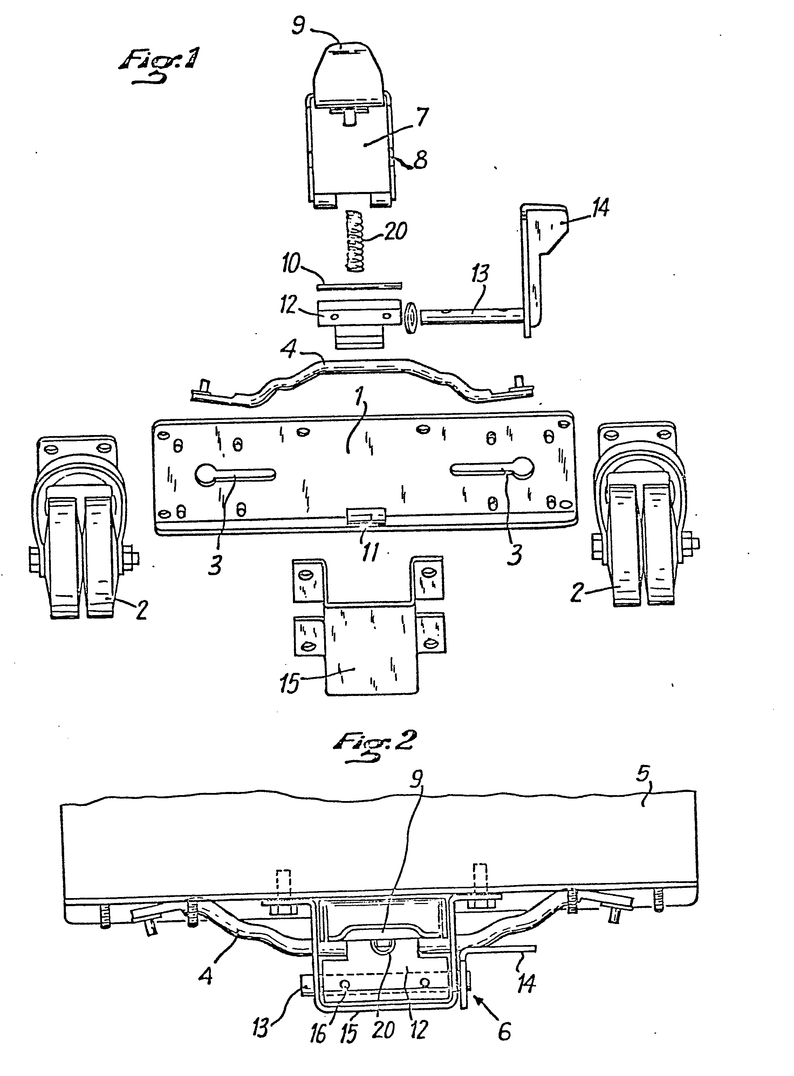

. Figure 1 : une vue générale des pièces détachées servant au montage du dispositif à boîtier selon l'invention ;

. Figure 2 : une représentation, en demi-élévation latérale, du boîtier monté sur la plaque-support de roues du chariot (roues non illustrées ici) ;

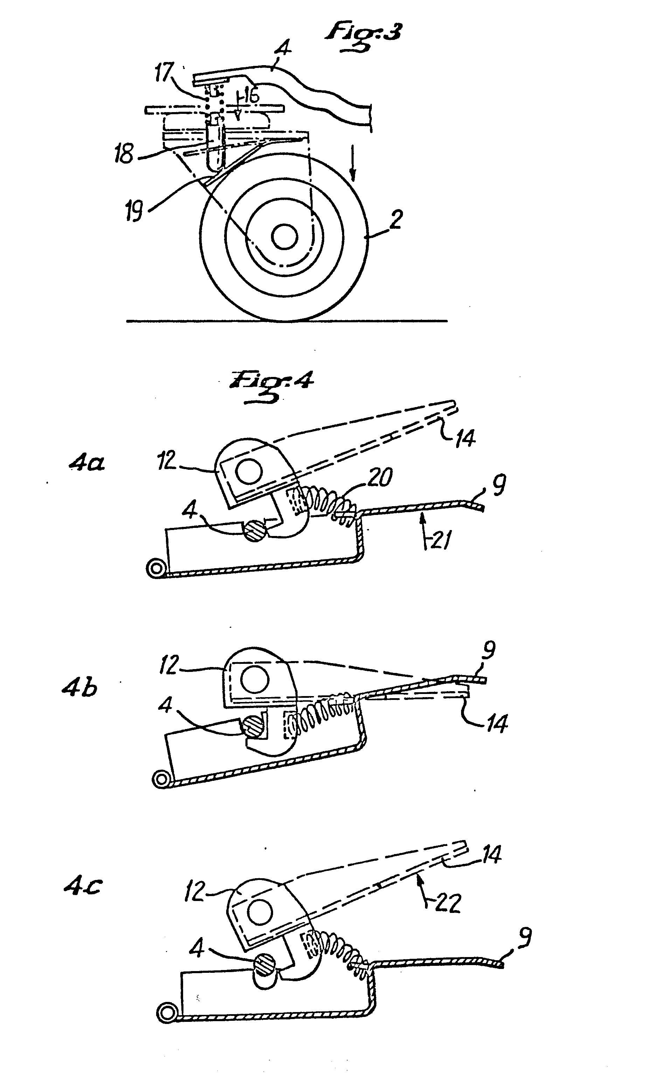

. Figure 3 : une vue de rappel du système connu de blocage de roue d'un chariot par l'intermédiaire d'une tringle ;

. Figure 4 : une représentation très schématique des phases successives de fonctionnement du dispositif dans les positions d'attente (4 a) blocage des roues (4 b) et déverrouillage (4 c).

Le dispositif selon l'invention est adapté à un montage sur les éléments connus constitués par : la plaque 1 destinée à supporter les roues 2 et munie d'évidements 3 pour le passage de la tringle 4 qui sert de levier d'appui pour le blocage des roues, ladite plaque étant solidaire du chassis 5 du chariot proprement dit.

Tel que représenté sur les figures 1 et 2, le dispositif revêt la configuration générale d'un boîtier, désigné par le repère général 6 dont les éléments sont essentiellement constitués par : une tôle en forme de bac 7 à bords relevés munis d'échancrures 8 servant de logement pour la tringle 4 et dont la languette extérieure 9 sert de seconde pédale (selon la terminologie susvisée), ce bac étant monté à pivotement, au moyen d'un axe 10, sur le bord relevé 11 de la plaque-support 1 ; un élément pivotant en forme de mâchoire ou loqueteau 12 dont l'axe de pivotement 13 est solidaire de la pédale de déverrouillage

0077719

14 (première pédale selon la terminologie susvisée) et s'engage dans une ouverture du couvercle 15 de boîtier, lequel - lors du montage - est fixé par vis-écrous sur la plaque-support 1. Afin d'assurer une position fixe du loqueteau 12 par rapport à l'axe 13, on introduit des vis de blocage ou moyens analogues dans les perforations 16 prévues sur l'axe et le loqueteau précités.

Par ailleurs, une liaison par ressort 20 s'effectue entre la première et la deuxième pédale, ce ressort étant monté entre un ergot solidaire de la languette 9 et un logement prévu dans le loqueteau 12.

Avant d'expliquer le fonctionnement des éléments essentiels du dispositif susdécrit, on rappellera succinctement, le principe de freinage de roues, déjà connu et illustré sur la figure 3. Par sollicitation vers le bas (flèche 16) la tête de la tringle 4 appuye, par l'intermédiaire d'un ressort 17, sur un goujon 18 qui, lui-même, force une plaquette 19 à bloquer la rotation de la roue 2.

La figure 4 illustre, en vue partielle et très schématique, l'inter-relation entre les deux pédales de blocage et déverrouillage selon l'invention, pendant les phases opérationnelles. En position 4a, le chariot est libre ; lors d'un appui sur la pédale de blocage 9 des roues selon la flèche 21, le loqueteau bascule sous l'action du ressort 20 et vient enclencher au creux de son épaulement la tige ou tringle 4(figure 4 b) ; cette tringle alors initie l'opération de freinage comme expliqué ci-dessus par référence à la figure 3. Lorsqu'on désire ensuite libérer le blocage, ou déverrouiller, on appuye sur la pédale 14 (flèche 22) pour provoquer le basculement du loqueteau et la mise en position libre, d'attente, de la tringle 4 donc du chariot lui-même.

On notera que les appuis successifs sur les pédales 9 et 14, respectivement de blocage des roues et de déverrouillage, sont toujours effectués en position normale c'est-à-dire de haut en bas, ceci .ᵉ la direction des flèches 21 et 22 de la figure 4 qui semblent inversées du fait que l'on a représenté le loqueteau 12 en position de retournement pour une meilleure compréhension du mouvement respectif des pièces.

Bien entendu, l'invention n'est pas limitée au mode de réalisation susdécrit et s'étend à toute variante d'exécution de fonctions équivalentes, dans le cadre des revendications qui suivent.

REVENDICATIONS

1. Dispositif pour le blocage et le déblocage (ou déverrouillage) des roues d'un chariot du type comportant, dans la plaque-support à laquelle sont fixées les roues, une tringle actionnée par pédale et commandant des plaquettes de freinage sur lesdites roues, le dispositif étant caractérisé en ce qu'il est constitué par un boîtier(6), fixé sur la plaque-support (1) des roues (2) et traversé par ladite tringle (4), ce boîtier comprenant un élément pivotant de type mâchoire ou loqueteau (12) monté sur un axe transversal (13) commandé par une première pédale (14) et relié par ressort (20) à une seconde pédale (7, 9), ce loqueteau étant pourvu d'un épaulement dans le creux duquel vient se loger la tringle (4) dans la position de blocage du chariot par appui sur la seconde pédale (7,9), la position de déverrouillage - qui permet à la tringle (4) d'échapper à l'épaulement - étant obtenue par pression sur la première pédale (14).

2. Dispositif suivant la revendication 1, caractérisé en ce que la première pédale (14), solidaire de l'axe 13, est à l'extérieur du boîtier (6), la seconde pédale étant constituée par un bac en tôle (7) à bords relevés muni d'échancrure (8) pour le passage de la tringle (4) et monté à pivotement autour d'un repli de la plaque-support (1), cette tôle faisant saillie du boîtier par une languette (9) qui sert de point d'appui pour la pédale.

3. Dispositif selon l'une quelconque des revendications 1 ou 2, caractérisé en ce que le couvercle (15) du boîtier (6) est fixé au centre de la plaque-support (1) et en ce que les deux pédales (7,9) et (14) sont actionnées de haut en bas par l'opérateur pour les opérations respectives de blocage et de déblocage des roues.

4. Dispositif selon la revendication 1, caractérisé en ce que le loqueteau (12) est rendu solidaire de l'axe de pivotement (13) par des moyens de fixation introduits dans des perforations (16) prévues sur l'axe et le loqueteau.

Fig.1

Fig.2

1/2

0077719

*Fig.3*

17
16
18
19
2
4

*Fig.4*

4a

12
20
4
14
9
21

4b

12
9
4
14

4c

12
14
4
22
9